# NEUE EUROPÄISCHE PATENTSCHRIFT

(11) **EP 0 617 208 B2**
(45) Veröffentlichungstag und Bekanntmachung des Hinweises auf die Entscheidung über den Einspruch: **17.01.2001**
(45) Hinweis auf die Patenterteilung: 29.10.1997
(21) Anmeldenummer: 93104990.2
(22) Anmeldetag: 26.03.1993
(51) Int. Cl.: F16C 35/06, B61C 3/00, H02K 5/173

(54) **Anordnung zur Lagerung einer Welle oder Achse in einem Tragteil**
Arrangement for bearing of a shaft or an axle in a supporting element
Agencement de montage d'un arbre ou d'un essieu dans un élément porteur

(43) Veröffentlichungstag der Anmeldung: 28.09.1994
(73) Patentinhaber: SKF GmbH, D-97419 Schweinfurt (DE)
(72) Erfinder: Gurka, Jiri, A-4441 Behamberg (AT); Huber, Rupert, A-4400 Steyr (AT); Köttritsch, Hubert, A-3300 Amstetten (AT); Kure, Gottfried, A-4050 Traun (AT); Müllner, Johann, A-4400 Steyr (AT); Weninger, Helmut, A-4400 Steyr (AT); Ekdahl, Egon, S-43491 Kungsbacka (SE)

(56) Entgegenhaltungen:
- EP-B- 0 323 789
- DE-A- 3 234 443
- DE-A- 4 138 867
- DE-C- 704 790
- DE-U- 1 834 297
- FR-A- 2 648 752
- "Wälzlager auf den Wegen des technischen Fortschritts", FAG Kugelfischer Schäfer KGaA, Schweinfurt, Verlag R. Oldenbourg GmbH, München 1984, Bild 243, Seiten 178 und 179
- INA-KATALOG 403, "DREHVERBINDUNGEN", SEITEN 40,41
- A. KÖTTRITSCH: "WÄLZLAGER", SEITEN 268, 269

## Beschreibung

Die Erfindung betrifft eine Anordnung der im Oberbegriff des Patentanspruchs 1 angegeben Art zur endseitigen Lagerung einer Welle oder Achse in einem Tragteil, nämlich der Antriebswelle eines Fahrmotors elektrischer Triebfahrzeuge im Motorgehäuse.

Aus der DE-A-41 38 867 ist eine Schienenfahrzeug-Achsanordnung bekannt, bei der eine Welle ein mit ihr verbundenes Rad trägt und mittels mindestens eines Wälzelementlagers frei drehbar durch einen Support abgestützt wird. Das Wälzelementlager weist einen Innenring auf, der drehfest mit der Welle verbunden ist und einen Außenring, der fest mit dem Support verbunden ist, sowie eine Mehrzahl von Wälzkörpern, die zwischen Innen- und Außenring angeordnet sind. Des weiteren verfügt die bekannte Schienenfahrzeug-Achsanordnung über eine Dichtungsbaugruppe.

Nachteilig ist, daß die Lageranordnung aus einer Vielzahl nicht miteinander verbundener Bauteile besteht und die Demontage ein "Zerlegen" der Lageranordnung zur Folge hat, das nicht nur eine Wiedermontage erschwert sondern auch sehr leicht zur Beschädigung einzelner Teile führt.

Bei Drehvorrichtungen (vgl. DE 1 834 297 U bzw. INA-Katalog 403 "Drehverbindungen", Seiten 40 und 41) ist es an sich bekannt, sowohl den Außenring als auch den Innenring einstückig mit einem nach außen bzw. innen gerichteten Flansch zu versehen, wobei beide Flansche durchgehende Bohrungen aufweisen. Die Schraubbefestigung der Flansche einer solchen Drehvorrichtung erfolgt gemeinhin einerseits von oben an eine untere Konstruktion und andererseits von unten an eine obere Konstruktion, d.h. nicht gemeinsam von einer Seite her.

Der Erfindung liegt die Aufgabe zugrunde, eine Anordnung der eingangs genannten Art zu schaffen, die sich in einfacher Weise montieren und demontieren läßt, keine hochgenauen Paßsitze erfordert, aber trotzdem eine zuverlässige Sicherung sowohl gegen ein Verdrehen der Lagerringe in bzw. auf den Lagersitzflächen als auch in axialer Richtung gewährleistet.

Diese Aufgabe wird erfindungsgemäß durch die im Kennzeichen von Patentanspruch 1 angegebenen Merkmale gelöst.

Die Vorteile der Erfindung bestehen insbesondere darin, daß die Anordnung eine Lagerungseinheit bildet, die komplett vormontierbar ist und deshalb in einfachster Weise ein- und ausgebaut werden kann. Aufgrund der Flanschbefestigung sowohl des Außen- als auch des Innenringes ist die Lage der Lagerungseinheit im Tragteil und auf der Welle oder Achse auch unter extremen Bedingungen gesichert, so daß nur vergleichsweise schmale Bereiche der Bohrung des Tragteils und der Welle bzw. Achse als Sitzfläche, und zwar mit relativ grober Toleranz, versehen zu werden brauchen, die lediglich der Zentrierung von Innen- und Außenring dienen.

Da die vormontierte Anordnung abgedichtet ist, kann dem Lager gegebenenfalls auch bereits der richtige Schmierstoff beigegeben sein, so daß die Gefahr einer falschen Schmierstoffwahl beim Einbau durch Hilfskräfte vermieden wird.

Aus den Unteransprüche ergeben sich weitere Vorteile, die bei einem Einsatz der Anordnung zur Lagerung der Welle eines Fahrmotors elektrischer Triebfahrzeuge in einem Motorgehäuse vorteilhaft sind. So kann die Labyrinthdichtung mit einem Impulsgeber und einem Sensor zur Umdrehungs- und Geschwindigkeitsmessung ausgestattet sein, der Lageraußenring kann mit einer Aufnahme für einen Temperaturfühlerversehen sein. In die eine Lagerungseinheit bildende Anordnung sind dann nicht nur die lagerspezifischen Teile sondern auch eine beträchtliche Anzahl weiterer Elemente integriert.

Ausführungsbeispiele der Erfindung sind in den Zeichnungen dargestellt und werden nachfolgend näher erläutert.

Es zeigen:
- Figur 1: die endseitige Lagerung der Antriebswelle eines Fahrmotors eines elektrischen Triebfahrzeuges und
- Figur 2: eine weitere Ausführungsvariante der Anordnung.

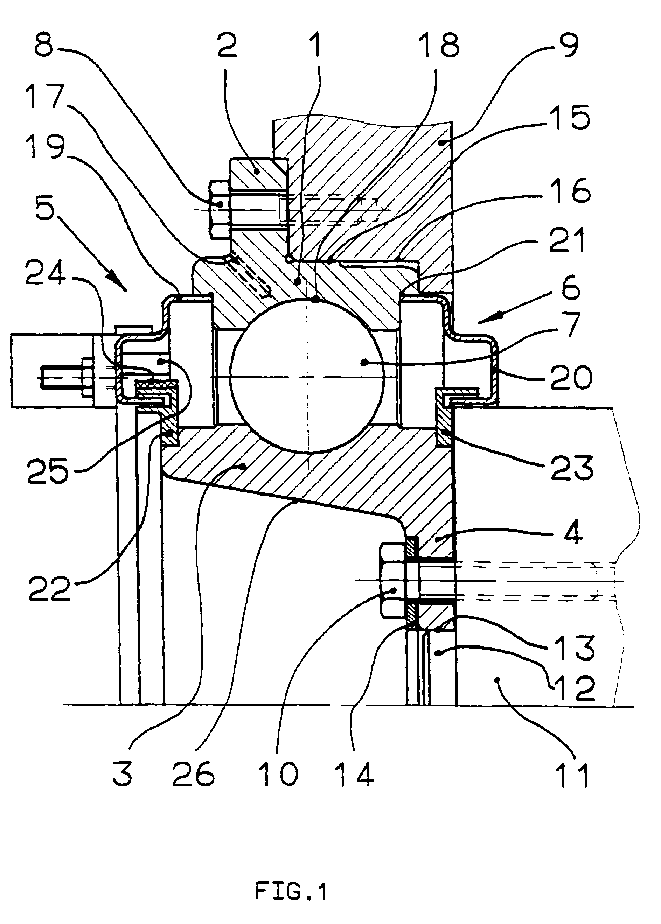

In Figur 1 ist der Außenring 1 eines Kugellagers einstückig mit einem sich radial nach außen erstreckenden Flansch versehen. Desgleichen ist am Lagerinnenring 3 ein Flansch 4 angeformt, der sich radial nach innen erstreckt. Auf beiden Stirnseiten des Lagers ist eine Labyrinthdichtung 5, 6 angeordnet, so daß der die Kugelreihe 7 zwischen den Lagerringen 1, 3 aufweisende Zwischenraum abgedichtet ist. Der Flansch 2 des Lageraußenringes 1 sowie der Flansch 4 des Lagerinnenringes 3 sind entlang ihres Umfangs mit Befestigungsbohrungen versehen, durch die der Lageraußenring 1 mittels Sechskantschrauben 8 am Gehäuse 9 des Fahrmotors eines elektrischen Triebfahrzeuges und der Lagerinnenring 3 mittels Sechskantschrauben 10 auf der Stirnfläche der Antriebswelle 11 des Fahrmotors befestigt ist. Zur Befestigung können auch Dehnschrauben eingesetzt sein.

Der aufgrund des einseitig angeordneten Flansches 4 frei tragende Lagerinnenring 3 ist vorzugsweise mit seinem Querschnitt als Träger gleicher Festigkeit ausgestaltet, so daß sich eine konische Bohrung 26 ergibt.

Die Antriebswelle 11 ist mit einem zylindrischen Ansatz 12 versehen, der von der Bohrung 13 des Flansches 4 aufgenommen wird und der Zentrierung des Lagerinnenringes 3 dient.

Der Lageraußenring 1 wird durch eine relativ kurze Paßfläche 15 in der Bohrung 16 des Motorgehäuses 9 zentriert. Eine Sackbohrung 17 dient als Aufnahme für einen Temperaturfühler, der auf diese Weise bis dicht an die zu überwachende Laufbahn 18 der Kugelreihe 7 herangeführt werden kann.

Beide Stirnseiten des Lageraußenringes 1 weisen Ausdrehungen auf, in die die im wesentlichen U-förmigen äußeren Dichtungsringelemente 19, 20 der Labyrinthdichtungen 5, 6 eingesetzt sind. Die Befestigung erfolgt z. B. in bekannter Weise dadurch, daß eine am äußeren Rand herausgebogene Nase (oder Wulst) des Dichtungsringelementes in eine Ringnut 21 in der Ausdrehung des Lagerringes 1 einrastet. Anstelle der oder zusätzliche zur Rastverbindung kann selbstverständlich auch ein Kleber verwendet werden.

Die zu den beiden Labyrinthdichtungen 5, 6 gehörenden inneren Dichtungsringelemente 22, 23 sind auf Schultern des Lagerinnenringes 3 angeordnet und durch Preßsitz mit oder ohne Zuhilfenahme eines Klebers befestigt. Sie bilden zusammen mit den äußeren Dichtungsringelementen 19, 20 enge Dichtspalte, die das Eindringen von Schmutz sowie das unkontrollierte Austreten von Schmierstoff verhindern.

Die in der Figur linke Labyrinthdichtung 5 ist weiterhin als Träger für eine Umdrehungs- und Geschwindigkeits-Meßeinrichtung ausgestaltet. Zu diesem Zweck ist auf dem Umfang des inneren Dichtungsringelementes 22 in bekannter Weise ein Impulsgeberring 24 angeordnet, der z. B. entlang seines Umfangs eine Aufeinanderfolge entgegengesetzt magnetisierter Zonen aufweist. Im äußeren Dichtungsringelement 19 ist ein Sensor 25 befestigt, der die bei rotierender Welle 11 an ihm vorbeibewegten magnetisierten Zonen abzutasten vermag und entsprechende Signale an ein elektronisches Gerät abgibt. Andere Ausführungsformen an Impulsgeberringen und Sensoren können selbstverständlich in vergleichbarer Weise eingesetzt werden.

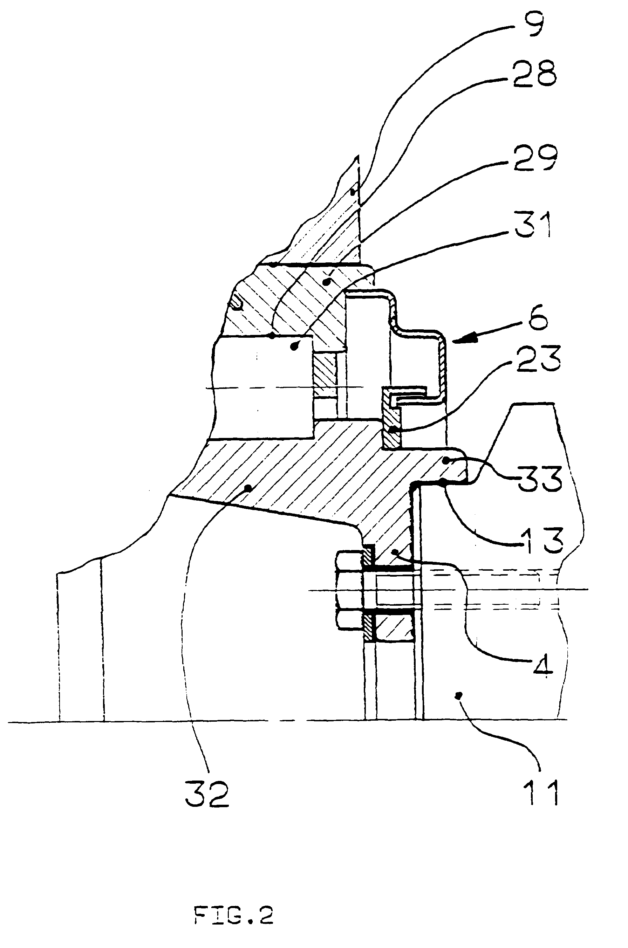

Figur 2 zeigt eine Anordnung mit einem Zylinderrollenlager, die im wesentlichen der Ausführungsform gemäß Figur 1 entspricht.

Der Lagerinnenring 32 weist auf der Seite seines Flansches einen ringförmigen Ansatz 33 auf, dessen Bohrung der Zentrierung des Lagerinnenringes 32 auf der Antriebswelle 11 dient.

## Patentansprüche

1. Anordnung zur endseitigen Lagerung einer Welle oder Achse in einem Tragteil, nämlich der Antriebswelle eines Fahrmotors elektrischer Triebfahrzeuge im Motorgehäuse, mit einem Lagerinnen- (3, 32) und einem Lageraußenring (1, 29), zwischen denen eine Wälzkörperreihe (7, 31) angeordnet ist, wobei der Zwischenraum durch eine Dichtung (5, 6) abgedichtet ist und wobei der Lageraußenring (1, 29) mit einer zylindrischen Zentrierfläche (15) zur zentrischen Führung in einer entsprechenden Bohrung des Tragteils (9) und der Lagerinnenring (3, 32) mit einer zylindrischen Zentrierfläche (13) zur zentrischen Führung auf einem entsprechenden Abschnitt der Welle oder Achse (11) versehen sind, dadurch gekennzeichnet, daß der Lageraußenring (1, 29) Bohrungen zur Schraubbefestigung am Tragteil (9) und der Lagerinnenring (3, 32) einen radial nach innen gerichteten Flansch (4) zur Schraubbefestigung an der Stirnseite der Welle oder Achse (11) aufweist und daß der Lageraußenring (1, 29) einstückig mit einem radial nach außen gerichteten Flansch (2) ausgeführt ist, wobei beide Flansche (2, 4) mit durchgehenden Bohrungen zur Schraubbefestigung von außen an den an einer der Lagerseiten angeordneten Endflächen von Welle (11) und Tragteil (9) versehen sind.

2. Anordnung nach Anspruch 1, dadurch gekennzeichnet, daß die Flanschfläche die Endfläche des Lagerinnenringes (3, 32) bildet oder in deren Nähe liegt und der Lagerinnenring (3, 32) eine kegelige Bohrung (26) aufweist, so daß er einen vom Flansch (4) ausgehenden Träger gleicher Festigkeit bildet.

3. Anordnung nach Anspruch 1 oder 2, dadurch gekennzeichnet, daß auf beiden Seiten des Lagers Dichtungen angeordnet sind und eine der Dichtungen (5, 6) mit einem Impulsgeber (24) zur Umdrehungs- und Geschwindigkeitsmessung versehen ist.

4. Anordnung nach einem der vorhergehenden Ansprüche, dadurch gekennzeichnet, daß der Lageraußenring (1, 29) eine bis nahe an die Wälzkörperlaufbahn heranreichende Aufnahme (17) für einen Thermofiihler aufweist.

## Claims

1. Arrangement for the support, in a supporting part, of one end of a shaft or axle, namely of the drive shaft of a drive motor of electric traction vehicles in the motor casing, having a bearing inner race (3, 32) and a bearing outer race (1, 29) between which a race of rolling bodies (7, 31) is arranged, the intermediate space being sealed by seals (5 and 6), the bearing outer race (1, 29) being provided with a cylindrical centering surface (15) for centering guidance in a corresponding bore of the supporting part (9) and the bearing inner race (3, 32) being provided with a cylindrical centering surface (13) for centering guidance on a corresponding section of the shaft or axle (11), characterized in that the bearing outer race (1, 29) has holes for bolt connection to the supporting part (9) and the bearing inner race (3, 32) has a flange (4) directed radially inwards for bolt connection to the end of the shaft or axle (11) and in that the bearing outer race (1, 29) is fashioned integrally with a flange (2) directed radially outwards, both flanges (2, 4) being provided with through holes for bolt fastening from outside on the end surfaces of the shaft (11) and the supporting part (9) arranged on one of the sides of the bearing.

2. Arrangement according to Claim 1, characterized in that the flange surface forms the end surface of the bearing inner race (3, 32) or is in its vicinity and the bearing inner race (3, 32) has a conical bore (26) so that it forms a constant strength beam starting from the flange (4).

3. Arrangement according to Claim 1 or 2, characterized in that seals are arranged on both sides of the bearing and one of the seals (5, 6) is provided with a pulse generator (24) for revolution and speed measurement.

4. Arrangement according to one of the preceding claims, characterized in that the bearing outer ring (1, 29) has a recess (17) for a thermal sensor, which recess (17) extends to the vicinity of the rolling body track.

## Revendications

1. Agencement de montage pour le montage d'un arbre ou d'un essieu à ses extrémités dans un élément porteur, à savoir pour le montage de l'arbre moteur d'un moteur de traction d'un véhicule ferroviaire électrique dans le carter de moteur, comportant une bague de roulement intérieure (3, 32) et une bague de roulement extérieure (1, 29) entre lesquelles est disposée une rangée de corps roulants (7, 31), la chambre intermédiaire étant fermée de manière étanche par une garniture d'étanchéité (5, 6), la bague de roulement extérieure (1, 29) étant pourvue d'une surface de centrage (15) cylindrique pour le guidage centré dans un alésage adapté de l'élément porteur (9) et la bague de roulement intérieure (3, 32) étant pourvue d'une surface de centrage (13) cylindrique pour le guidage centré sur une partie adaptée de l'arbre ou de l'essieu, caractérisé par le fait que la bague de roulement extérieure (1, 29) comporte des trous pour sa fixation par vis à l'élément porteur (9) et la bague de roulement intérieure (3, 32) comporte une bride (4) qui s'étend radialement vers l'intérieur pour sa fixation par vis sur la face d'extrémité de l'arbre ou de l'essieu (11), et en ce que la bague de roulement extérieure (1, 29) est réalisée d'une pièce avec une bride (2) qui s'étend radialement en direction de l'extérieur, les deux brides (2, 4) étant pourvues de trous débouchants pour la fixation par vis, depuis l'extérieur, aux surfaces d'extrémité de l'arbre (11) et de l'élément porteur (9), disposées d'un côté du roulement.

2. Agencement selon la revendication 1, caractérisé par le fait que la surface de la bride forme la surface d'extrémité de la bague de roulement intérieure (3, 32) ou est disposée à proximité de celle-ci et que la bague de roulement intérieure (3, 32) comporte un alésage (26) conique tel qu'elle forme un support à résistance constante qui s'étend à partir de la bride (4).

3. Agencement selon la revendication 1 ou 2, caractérisé par le fait que des garnitures d'étanchéité sont disposées de chaque côté du roulement et que l'une des garnitures d'étanchéité (5, 6) est pourvue d'un capteur d'impulsions (24) de mesure de rotation et de vitesse.

4. Agencement selon l'une des revendications précédentes, caractérisé par le fait que la bague de roulement extérieure (1, 29) comporte un logement (17) pour un capteur de température qui s'étend jusqu'au voisinage du chemin de roulement des corps roulants.
